# EUROPÄISCHE PATENTSCHRIFT

(11) **EP 3 122 630 B1**
(45) Veröffentlichungstag und Bekanntmachung des Hinweises auf die Patenterteilung: **22.07.2020**
(21) Anmeldenummer: 15710479.5
(22) Anmeldetag: 13.03.2015
(51) Int. Cl.: B64D 11/06

(54) **FLUGZEUGSITZSYSTEM**
AIRCRAFT SEAT SYSTEM
SYSTÈME DE SIÈGE D'AVION

(30) Priorität: 24.03.2014 DE 102014104055
(43) Veröffentlichungstag der Anmeldung: 01.02.2017
(73) Patentinhaber: Recaro Aircraft Seating GmbH & Co. KG, 74523 Schwäbisch Hall (DE)
(72) Erfinder: CLUCAS, Daniel William, London E9 6FS (GB); ERSAN, Ali, London Greater London E2 0QA (GB)
(74) Vertreter: Daub, Thomas
(86) Internationale Anmeldenummer: PCT/EP2015/055354
(87) Internationale Veröffentlichungsnummer: WO 2015/144465

(56) Entgegenhaltungen:
- EP-A2- 0 957 025
- WO-A1-2012/140515
- US-A1- 2003 218 095
- US-A1- 2005 001 098

## Beschreibung

### Stand der Technik

Die Erfindung betrifft ein Flugzeugsitzsystem nach Anspruch 1.

Dokument WO 2012/140515 A1 offenbart ein Flugzeugsitzsystem mit mehreren Modulen welche ausfahrbare Beinauflagen beinhaltet. Es ist bereits ein Flugzeugsitzsystem mit zumindest einem ersten Flugzeugsitzmodul, das einen Flugzeugsitz eines Flugzeugsitzbereichs und eine Konsole eines weiteren Flugzeugsitzbereichs ausbildet, mit einem zweiten Flugzeugsitzmodul, das einen Flugzeugsitz des weiteren Flugzeugsitzbereichs und eine Konsole eines weiteren Flugzeugsitzbereichs ausbildet, und mit zumindest einem dritten Flugzeugsitzmodul, das einen Flugzeugsitz des weiteren Flugzeugsitzbereichs und eine Konsole eines weiteren Flugzeugsitzbereichs ausbildet, vorgeschlagen worden.

Die Aufgabe der Erfindung besteht insbesondere darin, eine gattungsgemäße Vorrichtung mit verbesserten Eigenschaften hinsichtlich einer kompakten Anordnung von Flugzeugsitzen der Business- und/oder First-Class-Variante bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einem Flugzeugsitzsystem mit zumindest einem ersten Flugzeugsitzmodul, das einen Flugzeugsitz eines Flugzeugsitzbereichs und eine Konsole mit einer starren Beinablage eines weiteren Flugzeugsitzbereichs ausbildet, mit einem zweiten Flugzeugsitzmodul, das einen Flugzeugsitz des weiteren Flugzeugsitzbereichs und eine Konsole mit einer starren Beinablage eines weiteren Flugzeugsitzbereichs ausbildet, und mit zumindest einem dritten Flugzeugsitzmodul, das einen Flugzeugsitz des weiteren Flugzeugsitzbereichs und eine Konsole mit einer starren Beinablage eines weiteren Flugzeugsitzbereichs ausbildet.

Es wird vorgeschlagen, dass ein Abstand zwischen dem ersten Flugzeugsitzmodul und dem zweiten Flugzeugsitzmodul in Flugrichtung kleiner ist als ein Abstand zwischen dem zweiten Flugzeugsitzmodul und dem dritten Flugzeugsitzmodul. Unter einem "Flugzeugsitzmodul" soll dabei insbesondere ein Modul verstanden werden, das einen Flugzeugsitz und zumindest einen Teil einer Peripherie eines Flugzeugsitzbereichs, dessen Teil der entsprechende Flugzeugsitz ist, ausbildet. Dabei ist ein Flugzeugsitzmodul vorzugsweise als ein Montagemodul ausgebildet, das vorzugsweise komplett vormontiert in einem Flugzeug montiert werden kann. Unter einem "Flugzeugsitz" soll dabei insbesondere ein Sitz verstanden werden, der in einer Kabine eines Flugzeugs aufgeständert ist und der dazu vorgesehen ist, einen Sitzplatz für eine Person im Flugzeug bereitzustellen. Unter einem Flugzeugsitz soll in diesem Zusammenhang insbesondere ein Business-Class-Flugzeugsitz oder ein First-Class-Flugzeugsitz verstanden werden. Unter einem "Flugzeugsitzbereich" soll dabei insbesondere ein Bereich verstanden werden, den eine Person in einer Flugzeugkabine zur Verfügung hat. Dabei weist ein Flugzeugsitzbereich vorzugsweise mehrere Anbauelemente für eine Benutzung durch einen Fluggast auf, wie beispielsweise eine Tischablage, einen Monitor oder Verstaumöglichkeiten. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einer "Konsole" soll dabei insbesondere ein Teil eines Flugzeugsitzbereichs verstanden werden, der neben und insbesondere vor einem Flugzeugsitz des entsprechenden Flugzeugsitzbereichs angeordnet ist und dabei verschiedene Funktionselemente des Flugzeugsitzbereichs umfasst, wie beispielsweise eine Beinauflage, die zur Bildung einer Liegefläche vorgesehen ist, einen Monitor, ein Ablageelement oder verschiedene Verstauelemente. Unter einer "Flugrichtung" soll dabei insbesondere eine Haupterstreckungsrichtung des Flugzeugs verstanden werden, wobei sich die Flugrichtung von einem Heck des Flugzeugs zu einem Bug des Flugzeugs erstreckt und vorzugsweise koaxial zu einer Mittelachse des Flugzeugs verläuft. Unter einem "Abstand zwischen zwei Flugzeugsitzmodulen" soll dabei insbesondere der kleinste Abstand zwischen den beiden Flugzeugsitzmodulen verstanden werden, wobei der Abstand dabei vorzugsweise parallel zu der Flugrichtung gemessen wird. Unter den "Abständen zwischen den Flugzeugsitzmodulen, die unterschiedlich groß sind", sollen dabei insbesondere lediglich Abstände zwischen Flugzeugsitzmodulen, die in einem Block zusammen in der Flugzeugkabine angeordnet sind, verstanden werden, wobei Flugzeugsitzmodule, zwischen denen ein Notausgang seitlich in einer Kabinenwand eingelassen ist, oder eine Trennwand zwischen unterschiedlichen Bereichen in der Flugzeugkabine explizit nicht darunter verstanden werden sollen. Dadurch kann eine besonders vorteilhafte und kompakte Anordnung von Flugzeugsitzen in einer Flugzeugkabine erreicht werden. Dadurch können in einem Flugzeug besonders vorteilhaft viele Flugzeugsitzbereiche mit Flugzeugsitzen der Business- und/oder First-Class-Variante angeordnet werden.

Weiter wird vorgeschlagen, dass der Abstand zwischen dem ersten Flugzeugsitzmodul und dem zweiten Flugzeugsitzmodul zumindest um die Hälfte kleiner ist als ein Abstand zwischen dem zweiten Flugzeugsitzmodul und dem dritten Flugzeugsitzmodul. Darunter, dass "der Abstand zumindest um die Hälfte kleiner ist", soll dabei insbesondere verstanden werden, dass der Abstand zwischen dem ersten Flugzeugsitzmodul und dem zweiten Flugzeugsitzmodul zumindest halb so groß ist, vorzugsweise mindestens 12.7 cm (5 Zoll) kleiner, und in einer besonders vorteilhaften Ausgestaltung mindestens 22.86 cm (9 Zoll) kleiner ist als der Abstand zwischen dem zweiten Flugzeugsitzmodul und dem dritten Flugzeugsitzmodul. Dadurch kann eine besonders vorteilhafte und platzsparende Anordnung der Flugzeugsitzmodule erreicht werden.

Ferner wird vorgeschlagen, dass das Flugzeugsitzmodul eine Erstreckung in Flugrichtung aufweist, die größer ist als eine Erstreckung des Flugzeugsitzmoduls in Flugrichtung. Unter einer "Erstreckung in Flugrichtung" soll dabei insbesondere eine Länge des Flugzeugsitzmoduls, parallel zu der Flugrichtung gemessen, verstanden werden, wobei die Erstreckung sich dabei von einem vordersten Punkt des Flugzeugsitzmoduls bis an einen hintersten Punkt des Flugzeugsitzmoduls erstreckt. Dadurch können die Flugzeugsitzmodule besonders vorteilhaft ausgebildet werden, sodass trotz unterschiedlicher Abstände der Flugzeugsitzmodule zueinander gleich große Flugzeugsitzbereiche entstehen.

Es wird weiter vorgeschlagen, dass das Flugzeugsitzmodul wenigstens ein Konsolenelement umfasst, das dazu vorgesehen ist, eine Erstreckung des Flugzeugsitzmoduls in Flugrichtung zu vergrößern. Unter einem "Konsolenelement" soll dabei insbesondere ein Element verstanden werden, das mit einem Grundmodul des Flugzeugsitzmoduls verbindbar ist, um das Flugzeugsitzmodul zu erweitern. Das Konsolenelement bildet dabei vorzugsweise Ablage- und Verstauelemente für einen Passagier aus. Dabei ist das Konsolenelement in einem montierten Zustand seitlich neben dem Flugzeugsitz angeordnet, den das Flugzeugsitzmodul ausbildet, und kann sich in einer TTL-Position des Flugzeugsitzes bis vor eine Vorderkante eines Sitzbodens des Flugzeugsitzes erstrecken. Das Konsolenelement ist dabei in einem montierten Zustand fest mit dem Grundmodul des Flugzeugsitzmoduls verbunden. Dabei ist das Konsolenelement vorzugsweise schon vor einem Einbau in die Flugzeugkabine fest mit dem Grundmodul verbunden. Unter einer "TTL-Position" soll dabei insbesondere eine aufrechte Position des Flugzeugsitzes verstanden werden, die aus Sicherheitsgründen, insbesondere in einer Startphase, in einer Landephase und während Turbulenzen, eingenommen werden muss. Dabei stehen in der TTL-Position eine Rückenlehne des Flugzeugsitzes und der Sitzboden im Wesentlichen senkrecht aufeinander, vorzugsweise in einem Winkel von zwischen 90 Grad und 105 Grad. Die TTL-Position bildet dabei eine erste Endposition aus, in die der Flugzeugsitz maximal verstellbar ist. Dadurch kann das Flugzeugsitzmodul einfach in seiner Länge verändert werden. So können insbesondere vorteilhaft einfach unterschiedlich lange Flugzeugsitzmodule bereitgestellt werden, die eine Vielzahl von Gleichteilen aufweisen. Weiterhin wird vorgeschlagen, dass das zweite Flugzeugsitzmodul direkt an das erste Flugzeugsitzmodul anschließt. Unter "direkt anschließen" soll dabei insbesondere verstanden werden, dass das zweite Flugzeugsitzmodul direkt mit dem ersten Flugzeugsitzmodul verbunden ist. Dadurch kann eine besonders vorteilhaft kompakte Packungsdichte der Flugzeugsitzbereiche erreicht werden.

Des Weiteren wird vorgeschlagen, dass das Flugzeugsitzsystem wenigstens ein viertes Flugzeugsitzmodul aufweist, wobei zwei Flugzeugsitzmodule, die jeweils eine größere Erstreckung in Flugrichtung aufweisen, auf zwei Flugzeugsitzmodule mit einer kleineren Erstreckung in Flugrichtung folgen. Dadurch können die verschieden langen Flugzeugsitzmodule zur Ausbildung der Flugzeugsitzbereiche besonders vorteilhaft angeordnet werden. Dadurch kann weiter in vorherigen Anordnungen ungenutzter Raum gezielter einem Passagier zur Verfügung gestellt werden. Außerdem ist es vorteilhaft, dass eine Airline zwischen bezüglich eines verfügbaren Raums unterschiedlich ausgestalteten Flugzeugsitzbereichen differenzieren kann.

Zudem wird vorgeschlagen, dass auf einer Kabinenlänge von 11.43 m (450 Zoll) wenigstens 38 Flugzeugsitzbereiche bereitgestellt werden. Unter einer Kabinenlänge" soll dabei insbesondere eine Länge einer Flugzeugkabine verstanden werden, in der die Flugzeugsitze angeordnet werden. Die Flugzeugkabine weist dabei eine Kabinenbreite auf, die zusammen mit der Kabinenlänge eine Kabinenfläche aufspannt, auf der die Flugzeugsitzbereiche angebracht sind. Die 11.43 m (450 Zoll), die hier für die Kabinenlänge angegeben sind, entsprechen dabei einer typischen Länge eines Business-Class-Abteils in einer Flugzeugkabine. Unter "wenigstens 38 Flugzeugsitzbereichen" sollen dabei insbesondere zumindest 38, vorzugsweise zumindest 39 und in einer besonders vorteilhaften Ausgestaltung zumindest 40 Flugzeugsitzbereiche verstanden werden. Dadurch kann eine besonders gute Raumausnutzung in der Flugzeugkabine erreicht werden.

Das erfindungsgemäße Flugzeugsitzsystem soll hierbei nicht auf die oben beschriebene Anwendung und Ausführungsform beschränkt sein. Insbesondere kann das erfindungsgemäße Flugzeugsitzsystem zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind drei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Flugzeugsitzmoduls eines erfindungsgemäßen Flugzeugsitzsystems in einem ersten Ausführungsbeispiel,
- Fig. 2: eine schematische Draufsicht auf das erfindungsgemäße Flugzeugsitzsystem mit vier Flugzeugsitzmodulen,
- Fig. 3: eine schematische Draufsicht auf das erfindungsgemäße Flugzeugsitzsystem mit mehreren Flugzeugsitzmodulen in einem Ausschnitt einer Flugzeugkabine,
- Fig. 4: eine schematische Draufsicht auf ein erfindungsgemäßes Flugzeugsitzsystem in einem zweiten Ausführungsbeispiel mit mehreren Flugzeugsitzmodulen in einem Ausschnitt einer Flugzeugkabine und
- Fig. 5: eine schematische Draufsicht auf ein erfindungsgemäßes Flugzeugsitzsystem in einem dritten Ausführungsbeispiel mit mehreren Flugzeugsitzmodulen in einem Ausschnitt einer Flugzeugkabine.

### Beschreibung der Ausführungsbeispiele

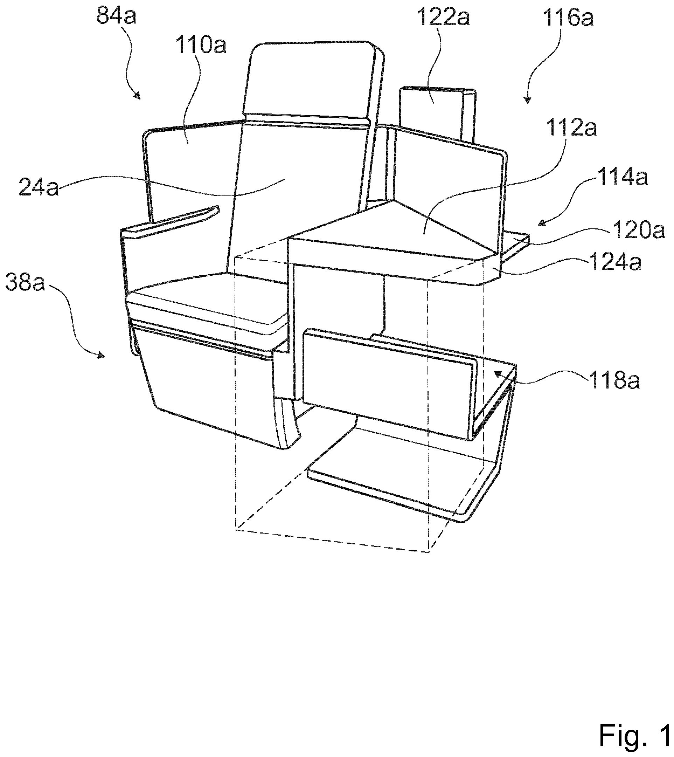

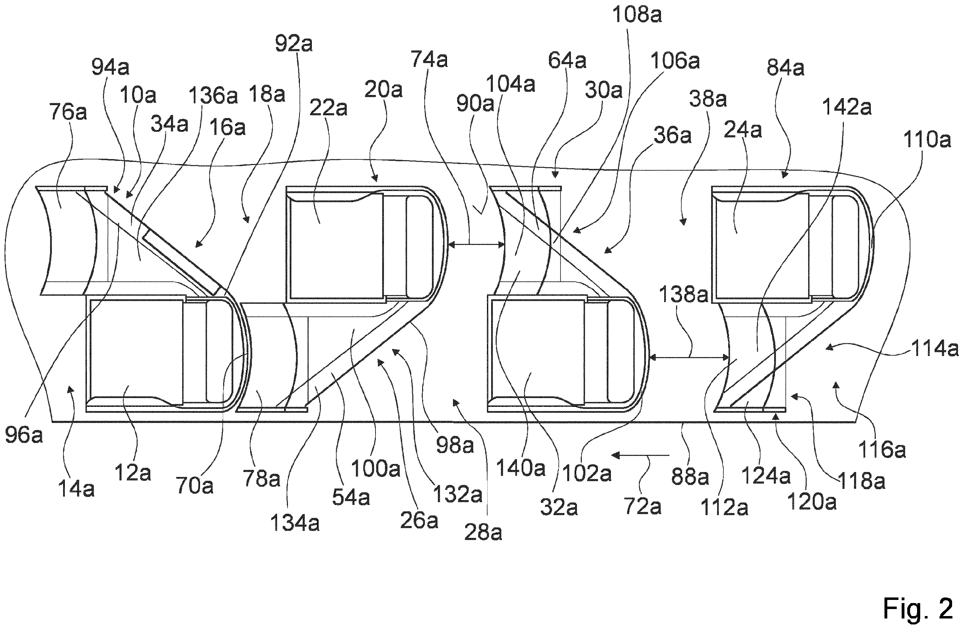

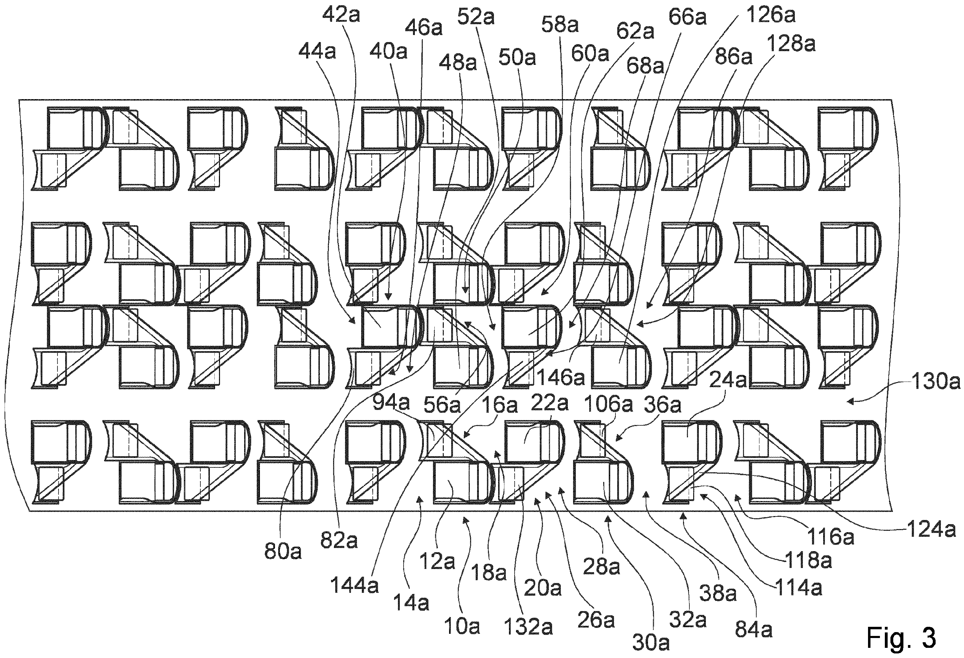

Die Figuren 1 bis 3 zeigen ein erfindungsgemäßes Flugzeugsitzsystem in einem ersten Ausführungsbeispiel. Das Flugzeugsitzsystem ist Teil eines nicht näher dargestellten Flugzeugs. Das Flugzeug umfasst eine teilweise dargestellte Flugzeugkabine 88a, in der das Flugzeugsitzsystem angeordnet ist. Die Flugzeugkabine 88a bildet einen Kabinenboden 90a aus. Der Kabinenboden 90a bildet eine Aufständerebene der Flugzeugkabine aus. Das Flugzeugsitzsystem umfasst mehrere Flugzeugsitzbereiche 14a, 18a, 28a, 38a, 44a, 48a, 58a, 68a, die jeweils für einen Flugpassagier vorgesehen sind. Dabei werden auf einer Kabinenlänge von 11.43 m (450 Zoll) 40 Flugzeugsitzbereiche 14a, 18a, 28a, 38a, 44a, 48a, 58a, 68a bereitgestellt. Dabei sind in den Zeichnungen der besseren Übersichtlichkeit halber lediglich die Flugzeugsitzbereiche 14a, 18a, 28a, 38a, 44a, 48a, 58a, 68a angezeigt und im Folgenden beschrieben. Die weiteren, nicht näher angezeigten und beschriebenen Flugzeugsitzbereiche sind dabei äquivalent zu den beschriebenen Flugzeugsitzbereichen 14a, 18a, 28a, 38a, 44a, 48a, 58a, 68a angeordnet und auch entsprechend ausgebildet.

Das Flugzeugsitzsystem umfasst ein erstes Flugzeugsitzmodul 10a. Das Flugzeugsitzmodul 10a ist auf dem Kabinenboden 90a der Flugzeugkabine 88a aufgeständert. Dazu weist das Flugzeugsitzmodul 10a eine nicht näher dargestellte Aufständereinheit auf. Die Aufständereinheit ist von einem Grundrahmen gebildet, der über nicht näher dargestellte Verbindungselemente mit dem Kabinenboden 90a verbunden ist. Dazu weist der Kabinenboden 90a vorzugsweise nicht näher dargestellte Befestigungsschienen auf, in die die Verbindungselemente der Aufständereinheit eingreifen. Das Flugzeugsitzmodul 10a umfasst einen Flugzeugsitz 12a. Der Flugzeugsitz 12a, der von dem ersten Flugzeugsitzmodul 10a gebildet wird, ist Teil des ersten Flugzeugsitzbereichs 14a. Das Flugzeugsitzmodul 10a umfasst eine Begrenzungsvorrichtung 92a, die den ersten Flugzeugsitzbereich 14a begrenzt. Die Begrenzungsvorrichtung 92a ist von einer Wandung gebildet, die den Flugzeugsitzbereich 14a nach hinten und zumindest im Bereich des Flugzeugsitzes 12a des ersten Flugzeugsitzbereichs 14a seitlich abgrenzt. Das Flugzeugsitzmodul 10a bildet einen Tischbereich 136a des ersten Flugzeugsitzbereichs 14a aus, der neben dem Flugzeugsitz 12a angeordnet ist. Das erste Flugzeugsitzmodul 10a bildet weiter nicht näher dargestellte und angezeigte Verstau-, Aufbewahrungs- und Haltemöglichkeiten, wie beispielsweise einen ausklappbaren Tisch, einen Tablet-Halter, ein Aufbewahrungsfach oder andere, dem Fachmann als sinnvoll erscheinende Elemente aus. Der Tischbereich 136a des ersten Flugzeugsitzbereichs 14a und die weiter nicht näher dargestellten und angezeigten Verstau-, Aufbewahrungs- und Haltemöglichkeiten erstrecken sich dabei, in Sitzrichtung gesehen, bis über eine Vorderkante des Flugzeugsitzes 12a des ersten Flugzeugsitzbereichs 14a. Das erste Flugzeugsitzmodul 10a bildet eine Konsole 16a des zweiten Flugzeugsitzbereichs 18a aus. Der zweite Flugzeugsitzbereich 18a ist hinter dem ersten Flugzeugsitzbereich 14a angeordnet. Das erste Flugzeugsitzmodul 10a bildet die Konsole 16a des zweiten Flugzeugsitzbereichs 18a dabei an einer dem ersten Flugzeugsitzbereich 14a abgewandten Seite der Begrenzungsvorrichtung 92a aus. Dabei umfasst die Konsole 16a des zweiten Flugzeugsitzbereichs 18a eine starre Beinablage 94a, einen Ablagebereich 96a und einen Monitor. Grundsätzlich ist es auch denkbar, dass die Konsole 16a des zweiten Flugzeugsitzbereichs 18a, die von dem ersten Flugzeugsitzmodul 10a gebildet ist, weitere Elemente, wie beispielsweise Aufbewahrungsmittel oder Ähnliches, umfasst. Der Bereich, in dem das erste Flugzeugsitzmodul 10a, die Konsole 16a des zweiten Flugzeugsitzbereichs 18a sowie der Tischbereich 136a und die verschiedenen Verstau-, Aufbewahrungs- und Haltemöglichkeiten angeordnet sind, ist, in Sitzrichtung des Flugzeugsitzes 12a gesehen, auf einer rechten Seite des Flugzeugsitzes 12a angeordnet. Dabei weist das Flugzeugsitzmodul 10a ein Grundmodul 34a auf, das einen Teil des Tischbereichs 136a, einen Teil der Begrenzungsvorrichtung 92a und die Konsole 16a des zweiten Flugzeugsitzbereichs 18a ausbildet. Das Grundmodul 34a bildet den Tischbereich 136a, die Begrenzungsvorrichtung 92a sowie die weiter nicht näher dargestellten und angezeigten Verstau-, Aufbewahrungs- und Haltemöglichkeiten bis zu der Vorderkante des Flugzeugsitzes 12a des ersten Flugzeugsitzbereichs 14a aus.

Das erste Flugzeugsitzmodul 10a umfasst ein Konsolenelement 76a. Das Konsolenelement 76a ist dazu vorgesehen, eine Erstreckung des Flugzeugsitzmoduls 10a in Flugrichtung 72a zu vergrößern. Das Konsolenelement 76a ist in einem montierten Zustand fest mit dem Grundmodul 34a des ersten Flugzeugsitzmoduls 10 verbunden. Dabei ist das Konsolenelement 76a zerstörungsfrei trennbar mit dem Grundmodul 34a des Flugzeugsitzmoduls 10a verbunden. Das Konsolenelement 76a ist dabei dazu vorgesehen, vor einem Einbau des Flugzeugsitzmoduls 10a in die Flugzeugkabine 88a an das Grundmodul 34a montiert zu werden. Das Konsolenelement 76a bildet dabei Teile des Flugzeugsitzmoduls 10 aus. Das Konsolenelement 76a erweitert das Flugzeugsitzmodul 10a. Das Konsolenelement 76a bildet einen Teil des Tischbereichs 136a des ersten Flugzeugsitzbereichs 14a, weitere nicht näher dargestellte und angezeigte Verstau-, Aufbewahrungs- und Haltemöglichkeiten des ersten Flugzeugsitzbereichs 14a und zumindest einen Teil der starren Beinablage 94a aus. Das Grundmodul 34a, das Konsolenelement 76a sowie der Flugzeugsitz 12a bilden das erste Flugzeugsitzmodul 10a aus. Das Konsolenelement 76a erstreckt sich in Sitzrichtung bis über eine Vorderkante des Flugzeugsitzes 12a.

Das Flugzeugsitzsystem umfasst ein zweites Flugzeugsitzmodul 20a. Das zweite Flugzeugsitzmodul 20a ist, äquivalent zu dem ersten Flugzeugsitzmodul 10a, auf dem Kabinenboden 90a der Flugzeugkabine 88a aufgeständert. Das Flugzeugsitzmodul 20a umfasst einen Flugzeugsitz 22a. Der Flugzeugsitz 22a, der von dem zweiten Flugzeugsitzmodul 20a gebildet wird, ist Teil des zweiten Flugzeugsitzbereichs 18a. Das zweite Flugzeugsitzmodul 20a ist im Wesentlichen gleich ausgebildet wie das erste Flugzeugsitzmodul 10a. Das zweite Flugzeugsitzmodul 20a ist über eine nicht näher dargestellte Aufständereinheit mit dem Kabinenboden 90a verbunden. Der Flugzeugsitz 22a, der von dem zweiten Flugzeugsitzmodul 20a gebildet wird, ist Teil des zweiten Flugzeugsitzbereichs 18a. Das Flugzeugsitzmodul 20a umfasst eine Begrenzungsvorrichtung 98a, die den zweiten Flugzeugsitzbereich 18a begrenzt. Die Begrenzungsvorrichtung 98a ist von einer Wandung gebildet, die den Flugzeugsitzbereich 18a nach hinten und zumindest im Bereich des Flugzeugsitzes 22a des zweiten Flugzeugsitzbereichs 18a seitlich abgrenzt. Das Flugzeugsitzmodul 20a bildet einen Tischbereich 100a des zweiten Flugzeugsitzbereichs 18a aus, der neben dem Flugzeugsitz 22a angeordnet ist. Das zweite Flugzeugsitzmodul 20a bildet, wie das erste Flugzeugsitzmodul 10a, weiter nicht näher dargestellte und angezeigte Verstau-, Aufbewahrungs- und Haltemöglichkeiten, wie beispielsweise einen ausklappbaren Tisch, einen Tablet-Halter, ein Aufbewahrungsfach oder andere, dem Fachmann als sinnvoll erscheinende Elemente aus. Der Tischbereich 100a des zweiten Flugzeugsitzbereichs 18a und die weiter nicht näher dargestellten und angezeigten Verstau-, Aufbewahrungs- und Haltemöglichkeiten erstrecken sich dabei, in Sitzrichtung gesehen, bis über eine Vorderkante des Flugzeugsitzes 22a des zweiten Flugzeugsitzbereichs 18a. Dabei ist es denkbar, dass die nicht näher dargestellten und angezeigten Verstau-, Aufbewahrungs- und Haltemöglichkeiten des zweiten Flugzeugsitzmoduls 20a äquivalent zu denen des ersten Flugzeugsitzmoduls 10a ausgebildet sind. Das zweite Flugzeugsitzmodul 20a bildet eine Konsole 26a des dritten Flugzeugsitzbereichs 28a aus. Der zweite Flugzeugsitzbereich 18a ist hinter dem ersten Flugzeugsitzbereich 14a angeordnet. Das erste Flugzeugsitzmodul 10a bildet die Konsole 26a des dritten Flugzeugsitzbereichs 28a dabei an einer dem zweiten Flugzeugsitzbereich 18a abgewandten Seite der Begrenzungsvorrichtung 98a aus. Dabei umfasst die Konsole 26a des dritten Flugzeugsitzbereichs 28a eine starre Beinablage 132a, einen Ablagebereich 134a und einen Monitor. Grundsätzlich ist es auch denkbar, dass die Konsole 26a des dritten Flugzeugsitzbereichs 28a, die von dem zweiten Flugzeugsitzmodul 20a gebildet ist, weitere Elemente, wie beispielsweise Aufbewahrungsmittel oder Ähnliches, umfasst. Das zweite Flugzeugsitzmodul 20a ist dabei im Wesentlichen äquivalent zu dem ersten Flugzeugsitzmodul 10a ausgebildet. Das zweite Flugzeugsitzmodul 20a ist dabei zu einer in Sitzrichtung verlaufenden Spiegelachse gespiegelt zu dem ersten Flugzeugsitzmodul 10a ausgebildet. Der Bereich, in dem das zweite Flugzeugsitzmodul 20a, die Konsole 26a des dritten Flugzeugsitzbereichs 28a sowie der Tischbereich 100a und die verschiedenen Verstau-, Aufbewahrungs- und Haltemöglichkeiten angeordnet sind, ist, in Sitzrichtung des Flugzeugsitzes 22a gesehen, auf einer linken Seite des Flugzeugsitzes 22a angeordnet. Dabei weist das Flugzeugsitzmodul 20a ein Grundmodul 54a aus, das einen Teil des Tischbereichs 100a, einen Teil der Begrenzungsvorrichtung 98a und die Konsole 26a des dritten Flugzeugsitzbereichs 28a ausbildet. Das Grundmodul 54a bildet den Tischbereich 100a, die Begrenzungsvorrichtung 98a sowie die weiter nicht näher dargestellten und angezeigten Verstau-, Aufbewahrungs- und Haltemöglichkeiten bis zu der Vorderkante des Flugzeugsitzes 22a des zweiten Flugzeugsitzbereichs 18a aus.

Das zweite Flugzeugsitzmodul 20a umfasst ebenfalls ein Konsolenelement 78a. Das Konsolenelement 78a ist dazu vorgesehen, eine Erstreckung des Flugzeugsitzmoduls 20a in Flugrichtung 72a zu vergrößern. Das Konsolenelement 78a ist in einem montierten Zustand fest mit dem Grundmodul 54a des ersten Flugzeugsitzmoduls 20a verbunden. Dabei ist das Konsolenelement 78a zerstörungsfrei trennbar mit dem Grundmodul 54a des Flugzeugsitzmoduls 20a verbunden. Das Konsolenelement 78a erweitert das zweite Flugzeugsitzmodul 20a. Das Konsolenelement 78a ist dabei im Wesentlichen äquivalent zu dem Konsolenelement 76a des ersten Flugzeugsitzbereichs 10a ausgebildet. Das Grundmodul 54a, das Konsolenelement 78a sowie der Flugzeugsitz 22a bilden das zweite Flugzeugsitzmodul 20a aus. Das Konsolenelement 78a erstreckt sich in Sitzrichtung bis über eine Vorderkante des Flugzeugsitzes 22a. Das zweite Flugzeugsitzmodul 20a weist dabei in Flugrichtung 72a eine gleiche Erstreckung auf wie das erste Flugzeugsitzmodul 10a.

Das Flugzeugsitzsystem umfasst ein drittes Flugzeugsitzmodul 30a. Das dritte Flugzeugsitzmodul 30a ist äquivalent zu den anderen Flugzeugsitzmodulen 10a, 20a auf dem Kabinenboden 90a der Flugzeugkabine 88a aufgeständert. Das Flugzeugsitzmodul 30a umfasst einen Flugzeugsitz 32a. Der Flugzeugsitz 32a, der von dem dritten Flugzeugsitzmodul 30a gebildet wird, ist Teil des dritten Flugzeugsitzbereichs 28a. Das dritte Flugzeugsitzmodul 30a weist einen im Wesentlichen gleichen Aufbau auf wie das erste Flugzeugsitzmodul 10a. Das dritte Flugzeugsitzmodul 30a ist über eine nicht näher dargestellte Aufständereinheit mit dem Kabinenboden 90a verbunden. Das dritte Flugzeugsitzmodul 30a umfasst einen Flugzeugsitz 32a. Der Flugzeugsitz 32a, der von dem dritten Flugzeugsitzmodul 30a gebildet wird, ist Teil des dritten Flugzeugsitzbereichs 28a. Das dritte Flugzeugsitzmodul 30a umfasst eine Begrenzungsvorrichtung 102a, die den dritten Flugzeugsitzbereich 28a begrenzt. Die Begrenzungsvorrichtung 102a ist von einer Wandung gebildet, die den Flugzeugsitzbereich 28a nach hinten und zumindest im Bereich des Flugzeugsitzes 32a des dritten Flugzeugsitzbereichs 28a seitlich abgrenzt. Das dritte Flugzeugsitzmodul 30a bildet einen Tischbereich 104a des dritten Flugzeugsitzbereichs 28a aus, der neben dem Flugzeugsitz 32a angeordnet ist. Der Tischbereich 104a des dritten Flugzeugsitzbereichs 28a erstreckt sich dabei bis an eine Vorderkante des Flugzeugsitzes 32a des dritten Flugzeugsitzbereichs 28a. Das dritte Flugzeugsitzmodul 30a bildet weiter nicht näher dargestellte und angezeigte Verstau-, Aufbewahrungs- und Haltemöglichkeiten, wie beispielsweise einen ausklappbaren Tisch, einen Tablet-Halter, ein Aufbewahrungsfach oder andere, dem Fachmann als sinnvoll erscheinende Elemente aus. Das dritte Flugzeugsitzmodul 30a bildet eine Konsole 36a des vierten Flugzeugsitzbereichs 38a aus. Der vierte Flugzeugsitzbereich 38a ist hinter dem dritten Flugzeugsitzbereich 28a angeordnet. Das dritte Flugzeugsitzmodul 30a bildet die Konsole 36a des vierten Flugzeugsitzbereichs 38a dabei an einer dem dritten Flugzeugsitzbereich 28a abgewandten Seite der Begrenzungsvorrichtung 102a aus. Dabei umfasst die Konsole 36a des vierten Flugzeugsitzbereichs 38a eine starre Beinablage 106a, einen Ablagebereich 108a und einen Monitor. Grundsätzlich ist es auch denkbar, dass die Konsole 36a des vierten Flugzeugsitzbereichs 38a, die von dem dritten Flugzeugsitzmodul 30a gebildet ist, weitere Elemente, wie beispielsweise Aufbewahrungsmittel oder Ähnliches, umfasst. Der Bereich, in dem das dritte Flugzeugsitzmodul 30a, die Konsole 36a des vierten Flugzeugsitzbereichs 38a sowie der Tischbereich 104a und die verschiedenen Verstau-, Aufbewahrungs- und Haltemöglichkeiten angeordnet sind, ist, in Sitzrichtung des Flugzeugsitzes 32a gesehen, auf einer rechten Seite des Flugzeugsitzes 32a angeordnet. Dabei weist das Flugzeugsitzmodul 30a ein Grundmodul 64a auf, das den Tischbereich 104a, die Begrenzungsvorrichtung 102a und die Konsole 36a des vierten Flugzeugsitzbereichs 38a ausbildet. Das Grundmodul 64a bildet zusammen mit dem Flugzeugsitz 32a das Flugzeugsitzmodul 30a aus. Das Grundmodul 64a bildet den Tischbereich 104a, die Begrenzungsvorrichtung 102a sowie die weiter nicht näher dargestellten und angezeigten Verstau-, Aufbewahrungs- und Haltemöglichkeiten bis zu der Vorderkante des Flugzeugsitzes 32a des dritten Flugzeugsitzbereichs 28a aus. Das Grundmodul 64a des dritten Flugzeugsitzmoduls 30a ist dabei äquivalent zu dem Grundmodul 34a des ersten Flugzeugsitzmoduls 10a ausgebildet. Das dritte Flugzeugsitzmodul 30a umfasst ein Konsolenelement 140a. Das Konsolenelement 140a ist in einem montierten Zustand fest mit dem Grundmodul 54a des dritten Flugzeugsitzmoduls 30 verbunden. Dabei ist das Konsolenelement 140a zerstörungsfrei trennbar mit dem Grundmodul 54a des Flugzeugsitzmoduls 30a verbunden. Das Konsolenelement 140a bildet dabei Teile des Flugzeugsitzmoduls 30a aus. Das Konsolenelement 140a erweitert das Flugzeugsitzmodul 30a. Das Konsolenelement 140a bildet einen Teil des Tischbereichs 104a des ersten Flugzeugsitzbereichs 14a, weitere nicht näher dargestellte und angezeigte Verstau-, Aufbewahrungs- und Haltemöglichkeiten des dritten Flugzeugsitzbereichs 28a und zumindest einen Teil der starren Beinablage 106a aus. Das Konsolenelement 140a ist dabei neben dem Flugzeugsitz 32a angeordnet. Dabei erstreckt sich das Konsolenelement 140a nicht bis vor eine Vorderkante des Flugzeugsitzes 32a. Das dritte Flugzeugsitzmodul 30a ist ausgebildet wie das erste Flugzeugsitzmodul 10a und ist lediglich durch das im Gegensatz zu dem Flugzeugsitzmodul 10a zurückgezogene Konsolenelement 140a in Flugrichtung 72a kürzer ausgebildet. Das erste Flugzeugsitzmodul 10a weist dadurch eine Erstreckung in Flugrichtung 72a auf, die größer ist als eine Erstreckung des dritten Flugzeugsitzmoduls 30a in Flugrichtung 72a. Das dritte Flugzeugsitzmodul 30a ist in Flugrichtung 72a kleiner ausgebildet als das erste Flugzeugsitzmodul 10a.

Das Flugzeugsitzsystem umfasst ein viertes Flugzeugsitzmodul 84a. Das vierte Flugzeugsitzmodul 84a ist, äquivalent zu den anderen Flugzeugsitzmodulen 10a, 20a, 30a auf dem Kabinenboden 90a der Flugzeugkabine 88a aufgeständert. Das Flugzeugsitzmodul 84a umfasst einen Flugzeugsitz 24a. Der Flugzeugsitz 24a, der von dem vierten Flugzeugsitzmodul 84a gebildet wird, ist Teil des vierten Flugzeugsitzbereichs 38a. Das vierte Flugzeugsitzmodul 84a weist einen im Wesentlichen gleichen Aufbau auf wie das zweite Flugzeugsitzmodul 20a. Das vierte Flugzeugsitzmodul 84a ist über eine nicht näher dargestellte Aufständereinheit mit dem Kabinenboden 90a verbunden. Das vierte Flugzeugsitzmodul 84a umfasst eine Begrenzungsvorrichtung 110a, die den vierten Flugzeugsitzbereich 38a begrenzt. Die Begrenzungsvorrichtung 110a ist von einer Wandung gebildet, die den Flugzeugsitzbereich 38a nach hinten und zumindest im Bereich des Flugzeugsitzes 24a des vierten Flugzeugsitzbereichs 38a seitlich abgrenzt. Das vierte Flugzeugsitzmodul 84a bildet einen Tischbereich 112a des vierten Flugzeugsitzbereichs 38a aus, der neben dem Flugzeugsitz 24a angeordnet ist. Der Tischbereich 112a des vierten Flugzeugsitzbereichs 38a erstreckt sich dabei bis an eine Vorderkante des Flugzeugsitzes 24a des dritten Flugzeugsitzbereichs 28a. Das vierte Flugzeugsitzmodul 84a bildet weiter nicht näher dargestellte und angezeigte Verstau-, Aufbewahrungs- und Haltemöglichkeiten, wie beispielsweise einen ausklappbaren Tisch, einen Tablet-Halter, ein Aufbewahrungsfach oder andere, dem Fachmann als sinnvoll erscheinende Elemente aus. Das vierte Flugzeugsitzmodul 84a bildet eine Konsole 114a eines fünften Flugzeugsitzbereichs 116a aus. Der fünfte Flugzeugsitzbereich 116a ist hinter dem vierten Flugzeugsitzbereich 38a angeordnet. Das vierte Flugzeugsitzmodul 84a bildet die Konsole 114a des fünften Flugzeugsitzbereichs 116a dabei an einer dem vierten Flugzeugsitzbereich 38a abgewandten Seite der Begrenzungsvorrichtung 110a aus. Dabei umfasst die Konsole 114a des fünften Flugzeugsitzbereichs 116a eine starre Beinablage 118a, einen Ablagebereich 120a und einen Monitor 122a. Grundsätzlich ist es auch denkbar, dass die Konsole 114a des fünften Flugzeugsitzbereichs 116a, die von dem vierten Flugzeugsitzmodul 84a gebildet ist, weitere Elemente, wie beispielsweise Aufbewahrungsmittel oder Ähnliches, umfasst. Der Bereich, in dem das vierte Flugzeugsitzmodul 84a, die Konsole 114a des fünften Flugzeugsitzbereichs 116a sowie der Tischbereich 112a und die verschiedenen Verstau-, Aufbewahrungs- und Haltemöglichkeiten angeordnet sind, ist, in Sitzrichtung des Flugzeugsitzes 24a gesehen, auf einer linken Seite des Flugzeugsitzes 32a angeordnet. Dabei weist das vierte Flugzeugsitzmodul 84a ein Grundmodul 124a auf, das den Tischbereichs 112a, die Begrenzungsvorrichtung 110a und die Konsole 114a des fünften Flugzeugsitzbereichs 116a ausbildet. Das Grundmodul 124a bildet zusammen mit dem Flugzeugsitz 24a das Flugzeugsitzmodul 84a aus. Das Grundmodul 124a bildet den Tischbereich 112a, die Begrenzungsvorrichtung 110a sowie die weiter nicht näher dargestellten und angezeigten Verstau-, Aufbewahrungs- und Haltemöglichkeiten bis zu der Vorderkante des Flugzeugsitzes 24a des vierten Flugzeugsitzbereichs 38a aus. Das Grundmodul 124a des vierten Flugzeugsitzmoduls 84a ist dabei äquivalent zu dem Grundmodul 54a des zweiten Flugzeugsitzmoduls 20a ausgebildet. Das vierte Flugzeugsitzmodul 84a ist dabei im Wesentlichen äquivalent zu dem dritten Flugzeugsitzmodul 30a ausgebildet. Das vierte Flugzeugsitzmodul 84a ist dabei zu einer in Sitzrichtung verlaufenden Spiegelachse gespiegelt zu dem dritten Flugzeugsitzmodul 30a ausgebildet. Das vierte Flugzeugsitzmodul 84a umfasst ein Konsolenelement 142a. Das Konsolenelement 142a ist in einem montierten Zustand fest mit dem Grundmodul 124a des vierten Flugzeugsitzmoduls 84a verbunden. Dabei ist das Konsolenelement 142a zerstörungsfrei trennbar mit dem Grundmodul 124a des Flugzeugsitzmoduls 84a verbunden. Das Konsolenelement 142a bildet dabei Teile des Flugzeugsitzmoduls 84a aus. Das Konsolenelement 142a erweitert das Flugzeugsitzmodul 84a. Das Konsolenelement 142a bildet einen Teil des Tischbereichs 112a des Flugzeugsitzbereichs 38a, weitere nicht näher dargestellte und angezeigte Verstau-, Aufbewahrungs- und Haltemöglichkeiten des vierten Flugzeugsitzbereichs 38a und zumindest einen Teil der starren Beinablage 118a aus. Das Konsolenelement 142a ist dabei neben dem Flugzeugsitz 24a angeordnet. Dabei erstreckt sich das Konsolenelement 142a nicht bis vor eine Vorderkante des Flugzeugsitzes 24a. Das vierte Flugzeugsitzmodul 84a ist ausgebildet wie das zweite Flugzeugsitzmodul 20a und ist lediglich durch das im Gegensatz zu dem Flugzeugsitzmodul 20a zurückgezogene Konsolenelement 142a in Flugrichtung 72a kürzer ausgebildet. Das zweite Flugzeugsitzmodul 20a weist dadurch eine Erstreckung in Flugrichtung 72a auf, die größer ist als eine Erstreckung des vierten Flugzeugsitzmoduls 84a in Flugrichtung 72a. Das vierte Flugzeugsitzmodul 84a ist in Flugrichtung 72a kleiner ausgebildet als das zweite Flugzeugsitzmodul 20a. Das erste Flugzeugsitzmodul 10a und das zweite Flugzeugsitzmodul 20a weisen in Flugrichtung 72a eine gleiche Erstreckung auf. Das dritte Flugzeugsitzmodul 30a und das vierte Flugzeugsitzmodul 84a weisen in Flugrichtung 72a eine gleiche Erstreckung auf. Das erste Flugzeugsitzmodul 10a und das zweite Flugzeugsitzmodul 20a sind in Flugrichtung größer ausgebildet als das dritte Flugzeugsitzmodul 30a und das vierte Flugzeugsitzmodul 84a. Das vierte Flugzeugsitzmodul 84a ist dabei in Figur 1 schematisch dargestellt. Dabei ist gestrichelt und abstrahiert eine Position eines nach vorne über eine Vorderkante eines entsprechenden Flugzeugsitzes 12a, 22a ragendes Konsolenelement 76a, 78a dargestellt.

Die vier Flugzeugsitzmodule 10a, 20a, 30a, 84a sind hintereinander angeordnet. Dabei ist ein Abstand 70a zwischen dem ersten Flugzeugsitzmodul 10a und dem dahinter angeordneten Flugzeugsitzmodul 20a kleiner als ein Abstand 74a zwischen dem zweiten Flugzeugsitzmodul 20a und dem dahinter angeordneten Flugzeugsitzmodul 30a. Der Abstand 74a zwischen dem zweiten Flugzeugsitzmodul 20a und dem dritten Flugzeugsitzmodul 30a beträgt 9 Zoll. Der Abstand 70a zwischen dem ersten Flugzeugsitzmodul 10a und dem zweiten Flugzeugsitzmodul 20a beträgt in etwa 0 Zoll. Das zweite Flugzeugsitzmodul 20a schließt direkt an das erste Flugzeugsitzmodul 10a an. Ein hinterer Bereich des Flugzeugsitzmoduls 10a, der hinter dem Flugzeugsitz 12a angeordnet ist, liegt dabei an einem vorderen Bereich des zweiten Flugzeugsitzmoduls 20 an. Dabei ist es grundsätzlich auch denkbar, dass zwischen dem ersten Flugzeugsitzmodul 10a und dem zweiten Flugzeugsitzmodul 20a ein zu vernachlässigender Spalt freigelassen ist, um eventuelle Toleranzen auszugleichen. Das vierte Flugzeugsitzmodul 84a, das hinter dem dritten Flugzeugsitzmodul 30a angeordnet ist, weist einen Abstand 138a zu dem dritten Flugzeugsitzmodul 30a auf, der größer ist als der Abstand 74a des dritten Flugzeugsitzmoduls 30a zu dem zweiten Flugzeugsitzmodul 20a. Der Abstand 138a des vierten Flugzeugsitzmoduls 84a zu dem dritten Flugzeugsitzmodul 30a beträgt dabei 18 Zoll. Der Abstand 138a zwischen dem dritten Flugzeugsitzmodul 30a und dem vierten Flugzeugsitzmodul 84a ist dabei vorzugsweise doppelt so groß wie der Abstand 74a zwischen dem zweiten Flugzeugsitzmodul 20a und dem dritten Flugzeugsitzmodul 30a. Grundsätzlich ist es auch denkbar, dass der Abstand 138a zwischen dem dritten Flugzeugsitzmodul 30a vierten Flugzeugsitzmodul 84a und dem vierten Flugzeugsitzmodul 84a gleich ist wie der Abstand 74a zwischen dem zweiten Flugzeugsitzmodul 20a und dem dritten Flugzeugsitzmodul 30a.

Das Flugzeugsitzsystem umfasst weitere erste Flugzeugsitzmodule 40a, zweite Flugzeugsitzmodule 50a, dritte Flugzeugsitzmodule 60a und vierte Flugzeugsitzmodule 86a. Die weiteren Flugzeugsitzmodule 40a, 50a, 60a, 86a sind jeweils äquivalent zu dem jeweiligen, oben beschriebenen ersten, zweiten, dritten und vierten Flugzeugsitzmodul 10a, 20a, 30a, 84a ausgebildet. Die weiteren Flugzeugsitzmodule 40a, 50a, 60a, 86a sind äquivalent wie die Flugzeugsitzmodule 10a, 20a, 30a, 84a zueinander ausgerichtet. Die Flugzeugsitzmodule 40a, 50a, 60a, 86a sind dabei jeweils Teil eines Flugzeugsitzbereichs 44a, 48a, 58a, 68a und weisen jeweils einen Flugzeugsitz 42a, 52a, 62a, 126a sowie eine Konsole 46a, 56a, 66a 128a eines hinter dem Flugzeugsitz 42a, 52a, 62a, 126a angeordneten Flugzeugsitzbereichs 48a, 58a, 68a auf. Die Flugzeugsitzmodule 40a, 50a, 60a, 86a weisen jeweils auch ein Konsolenelement 80a, 82a, 144a, 146a auf, das das entsprechende Flugzeugsitzmodul 40a, 50a erweitert. Die Flugzeugsitzmodule 40a, 50a, 60a, 86a sind in einem Mittelbereich der Flugzeugkabine 88a angeordnet. Zwischen den Flugzeugsitzmodulen 10a, 20a, 30a, 84a, die an einer Kabinenwand angeordnet sind, und den Flugzeugsitzmodulen 40a, 50a, 60a, 86a ist ein Flugzeuggang 130a angeordnet. Die Flugzeugsitzbereiche 14a, 18a, 28a, 38a, 44a, 48a, 58a, 68a, die von den Flugzeugsitzmodulen 10a, 20a, 30a, 40a, 50a, 60a, 84a, 86a gebildet sind, weisen jeweils einen eigenen Gangzugang auf und können von einem Passagier direkt über den Flugzeuggang 130a betreten werden. Alle Flugzeugsitzmodule 10a, 20a, 30a, 40a, 50a, 60a, 84a, 86a des Flugzeugsitzsystems (auch die nicht angezeigten) sind wie die beschriebenen Flugzeugsitzmodule 10a, 20a, 30a, 84a jeweils in immer gleich angeordneten Vierergruppen angeordnet. Auf zwei Flugzeugsitzmodule 10a, 20a, 40a, 50a mit einer größeren Erstreckung in Flugrichtung 72a folgen immer zwei Flugzeugsitzmodule 30a, 84a, 60a, 86a mit einer kleineren Erstreckung in Flugrichtung 72a. Grundsätzlich ist es auch denkbar, dass es von der wiederkehrenden Anordnung der Flugzeugsitzmodule 20a, 30a, 40a, 50a, 60a, 84a, 86a mit den unterschiedlich großen Erstreckungen in Flugrichtung 72a Ausnahmen gibt. Bei der Anordnung der Flugzeugsitzmodule 10a, 20a, 30a, 40a, 50a, 60a, 84a, 86a ist eine erste Reihe von Flugzeugsitzmodulen 10a, 20a, 30a, 86a an der ersten Kabinenwand angeordnet, eine zweite Reihe von Flugzeugsitzmodulen 40a, 50a, 60a, 86a und eine vierte Reihe von Flugzeugsitzmodulen in einem Mittelbereich der Flugzeugkabine und eine dritte Reihe von Flugzeugsitzmodulen an einer zweiten Kabinenwand. Dabei sind die Flugzeugsitzmodule 40a, 50a, 60a, 86a der einen, im Mittelbereich angeordneten Reihe und die anderen Flugzeugsitzmodule der anderen, im Mittelbereich angeordneten Reihe versetzt zueinander angeordnet, sodass ein Flugzeugsitz eines Flugzeugsitzmoduls der einen Reihe seitlich an einen Bereich, in dem das andere Flugzeugsitzmodul eine Konsole ausbildet, angrenzt.

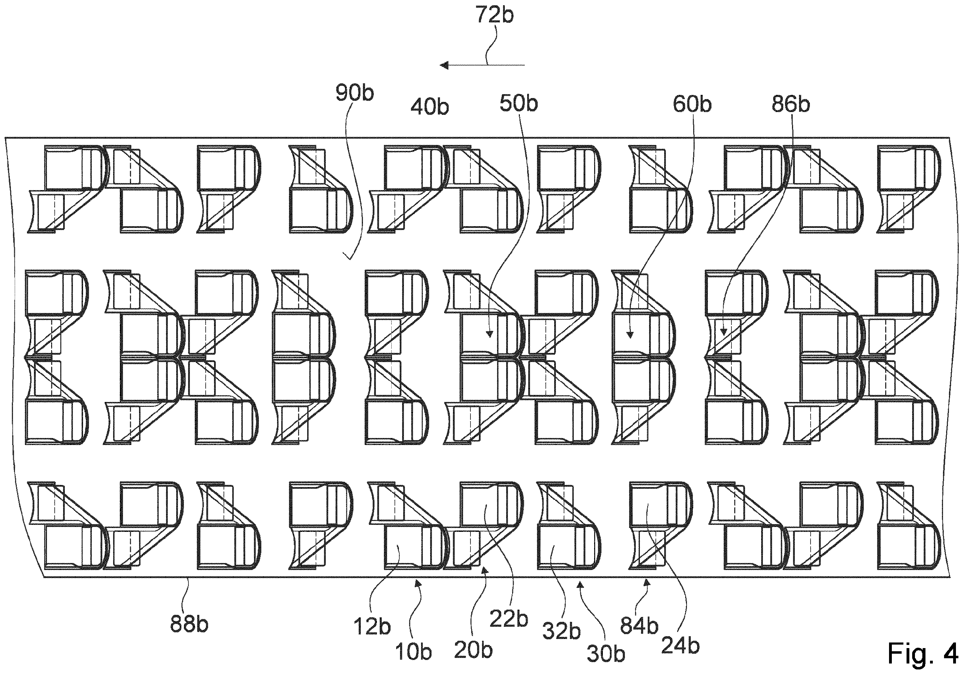

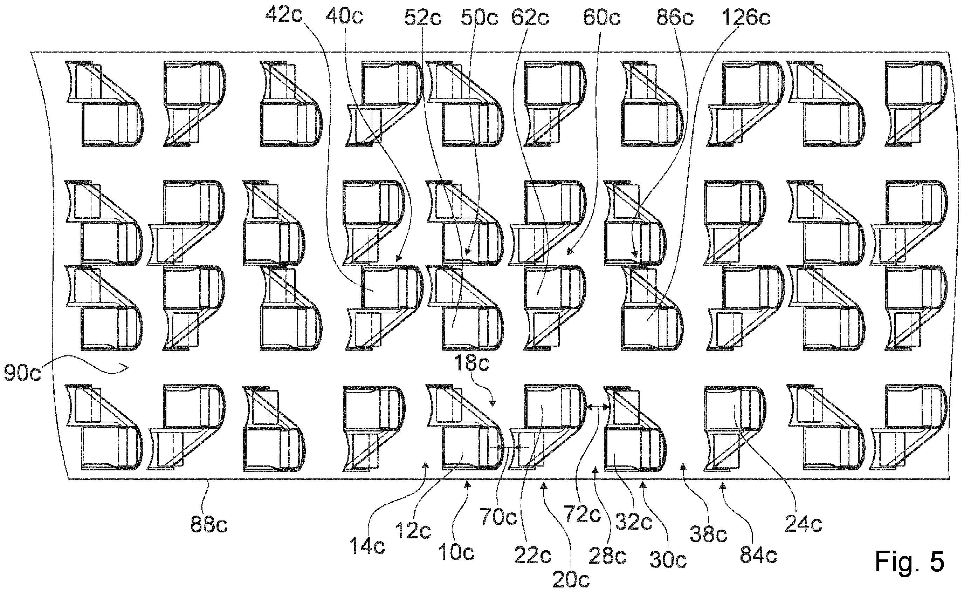

In Fig. 4 und 5 sind zwei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Fig. 1 bis 3, verwiesen werden kann. Zur Unterscheidung der Ausführungsbeispiele ist der Buchstabe a den Bezugszeichen des Ausführungsbeispiels in Fig. 1 bis 3 nachgestellt. In den Ausführungsbeispielen der Fig. 4 und 5 ist der Buchstabe a durch die Buchstaben b und c ersetzt.

Die Figur 4 zeigt ein erfindungsgemäßes Flugzeugsitzsystem in einem zweiten Ausführungsbeispiel. Das Flugzeugsitzsystem ist Teil eines nicht näher dargestellten Flugzeugs. Das Flugzeug umfasst eine teilweise dargestellte Flugzeugkabine 88b, in der das Flugzeugsitzsystem angeordnet ist. Die Flugzeugkabine 88b bildet einen Kabinenboden 90b aus. Der Kabinenboden 90b bildet eine Aufständerebene der Flugzeugkabine 88b aus. Das Flugzeugsitzsystem umfasst mehrere Flugzeugsitzbereiche 14b, 18b, 28b, 38b, 44b, 48b, 58b, 68b, die jeweils für einen Flugpassagier vorgesehen sind. Dabei sind auf einer Kabinenlänge von 11.43 m (450 Zoll) 40 Flugzeugsitzbereiche 14b, 18b, 28b, 38b, 44b, 48b, 58b, 68b bereitgestellt.

Das Flugzeugsitzsystem umfasst ein erstes Flugzeugsitzmodul 10b. Das Flugzeugsitzmodul 10b umfasst einen Flugzeugsitz 12b. Das Flugzeugsitzsystem umfasst ein zweites Flugzeugsitzmodul 20b. Das Flugzeugsitzmodul 20b umfasst einen Flugzeugsitz 22b. Das Flugzeugsitzsystem umfasst ein drittes Flugzeugsitzmodul 30b. Das Flugzeugsitzmodul 30b umfasst einen Flugzeugsitz 32b. Das Flugzeugsitzsystem umfasst ein viertes Flugzeugsitzmodul 84b. Das Flugzeugsitzmodul 84b umfasst einen Flugzeugsitz 24b. Das Flugzeugsitzsystem umfasst weitere erste Flugzeugsitzmodule 40b, zweite Flugzeugsitzmodule 50b, dritte Flugzeugsitzmodule 60b und vierte Flugzeugsitzmodule 86b. Die Flugzeugsitzmodule 40b, 50b, 60b, 86b sind dabei jeweils Teil eines Flugzeugsitzbereichs 44b, 48b, 58b, 68b und weisen jeweils einen Flugzeugsitz 42b, 52b, 62b, 126b auf. Die Flugzeugsitzmodule 10b, 20b, 30b, 40b, 50b, 60b, 84b, 86b und die entsprechenden Flugzeugsitze 12b, 22b, 32b, 24b, 42b, 52b, 62b, 126b sind äquivalent zu dem ersten Flugzeugsitzmodul des ersten Ausführungsbeispiels der Figuren 1 bis 3 ausgebildet. Lediglich eine Anordnung der Flugzeugsitzmodule 40b, 50b, 60b, 86b der in einem Mittelbereich angeordneten Reihe und der Flugzeugsitzmodule einer anderen im Mittelbereich angeordneten Reihe ist unterschiedlich zu dem ersten Ausführungsbeispiel der Figuren 1 bis 3. Die Flugzeugsitzmodule 40b, 50b, 60b, 86b der in einem Mittelbereich angeordneten Reihe und die Flugzeugsitzmodule der anderen im Mittelbereich angeordneten Reihe sind so angeordnet, dass ein Flugzeugsitz eines Flugzeugsitzmoduls 40b, 50b, 60b, 86b der einen Reihe seitlich an einen Flugzeugsitz des benachbarten Flugzeugsitzmoduls angrenzt.

Die Figuren 5 zeigt ein erfindungsgemäßes Flugzeugsitzsystem in einem dritten Ausführungsbeispiel. Das Flugzeugsitzsystem ist Teil eines nicht näher dargestellten Flugzeugs. Das Flugzeug umfasst eine teilweise dargestellte Flugzeugkabine 88c, in der das Flugzeugsitzsystem angeordnet ist. Die Flugzeugkabine 88c bildet einen Kabinenboden 90c aus. Der Kabinenboden 90c bildet eine Aufständerebene der Flugzeugkabine 88c aus. Das Flugzeugsitzsystem umfasst mehrere Flugzeugsitzbereiche 14c, 18c, 28c, 38c, 44c, 48c, 58c, 68c, die jeweils für einen Flugpassagier vorgesehen sind. Dabei sind auf einer Kabinenlänge von 11.43 m (450 Zoll) 38 Flugzeugsitzbereiche 14c, 18c, 28c, 38c, 44c, 48c, 58c, 68c bereitgestellt werden.

Das Flugzeugsitzsystem umfasst ein erstes Flugzeugsitzmodul 10c. Das Flugzeugsitzmodul 10c umfasst einen Flugzeugsitz 12c. Das Flugzeugsitzsystem umfasst ein zweites Flugzeugsitzmodul 20c. Das Flugzeugsitzmodul 20c umfasst einen Flugzeugsitz 22c. Das Flugzeugsitzsystem umfasst ein drittes Flugzeugsitzmodul 30c. Das Flugzeugsitzmodul 30c umfasst einen Flugzeugsitz 32c. Das Flugzeugsitzsystem umfasst ein viertes Flugzeugsitzmodul 84c. Das Flugzeugsitzmodul 84c umfasst einen Flugzeugsitz 24c. Das Flugzeugsitzsystem umfasst weitere erste Flugzeugsitzmodule 40c, zweite Flugzeugsitzmodule 50c, dritte Flugzeugsitzmodule 60c und vierte Flugzeugsitzmodule 86c. Die Flugzeugsitzmodule 40c, 50c, 60c, 86c sind dabei jeweils Teil eines Flugzeugsitzbereichs 44c, 48c, 58c, 68c und weisen jeweils einen Flugzeugsitz 42c, 52c, 62c, 126c auf. Die Flugzeugsitzmodule 10c, 20c, 30c, 40c, 50c, 60c, 84c, 86c und die entsprechenden Flugzeugsitze 12c, 22c, 32c, 24c, 42c, 52c, 62c, 126c sind äquivalent zu dem ersten Flugzeugsitzmodul des ersten Ausführungsbeispiels der Figuren 1 bis 3 ausgebildet. Lediglich ein Abstand 70c zwischen dem ersten Flugzeugsitzmodul 10c, 40c und dem zweiten Flugzeugsitzmodul 20c, 50c ist im Vergleich zu dem ersten Ausführungsbeispiel der Figuren 1 bis 3 unterschiedlich. Der Abstand 70c zwischen dem ersten Flugzeugsitzmodul 10c, 40c und dem zweiten Flugzeugsitzmodul 20c, 50c ist um die Hälfte kleiner als ein Abstand 74c zwischen dem zweiten Flugzeugsitzmodul 20c, 50c und dem dritten Flugzeugsitzmodul 30c, 60c. Der Abstand 70c zwischen dem ersten Flugzeugsitzmodul 10c, 40c und dem zweiten Flugzeugsitzmodul 20c, 50c beträgt 9 Zoll. Der Abstand 74c zwischen dem zweiten Flugzeugsitzmodul 20c, 50c und dem dritten Flugzeugsitzmodul 30c, 60c beträgt 50.8 cm (20 Zoll).

### Bezugszeichen

- 10: Flugzeugsitzmodul
- 12: Flugzeugsitz
- 14: Flugzeugsitzbereich
- 16: Konsole
- 18: Flugzeugsitzbereich
- 20: Flugzeugsitzmodul
- 22: Flugzeugsitz
- 24: Flugzeugsitz
- 26: Konsole
- 28: Flugzeugsitzbereich
- 30: Flugzeugsitzmodul
- 32: Flugzeugsitz
- 34: Grundmodul
- 36: Konsole
- 38: Flugzeugsitzbereich
- 40: Flugzeugsitzmodul
- 42: Flugzeugsitz
- 44: Flugzeugsitzbereich
- 46: Konsole
- 48: Flugzeugsitzbereich
- 50: Flugzeugsitzmodul
- 52: Flugzeugsitz
- 54: Grundmodul
- 56: Konsole
- 58: Flugzeugsitzbereich
- 60: Flugzeugsitzmodul
- 62: Flugzeugsitz
- 64: Grundmodul
- 66: Konsole
- 68: Flugzeugsitzbereich
- 70: Abstand
- 72: Flugrichtung
- 74: Abstand
- 76: Konsolenelement
- 78: Konsolenelement
- 80: Konsolenelement
- 82: Konsolenelement
- 84: Flugzeugsitzmodul
- 86: Flugzeugsitzmodul
- 88: Flugzeugkabine
- 90: Kabinenboden
- 92: Begrenzungsvorrichtung
- 94: starre Beinablage
- 96: Ablagebereich
- 98: Begrenzungsvorrichtung
- 100: Tischbereich
- 102: Begrenzungsvorrichtung
- 104: Tischbereich
- 106: Beinablage
- 108: Ablagebereich
- 110: Begrenzungsvorrichtung
- 112: Tischbereich
- 114: Konsole
- 116: Flugzeugsitzbereich
- 118: Beinablage
- 120: Ablagebereich
- 122: Monitor
- 124: Grundmodul
- 126: Flugzeugsitz
- 128: Konsole
- 130: Flugzeuggang
- 132: Beinablage
- 134: Ablagebereich
- 136: Tischbereich
- 138: Abstand
- 140: Konsolenelement
- 142: Konsolenelement
- 144: Konsolenelement
- 146: Konsolenelement

## Patentansprüche

1. Flugzeugsitzsystem mit zumindest einem ersten Flugzeugsitzmodul (10a, 40a; 10b, 40b; 10c, 40c), das einen Flugzeugsitz (12a, 42a; 12b, 42b; 12c, 42c) eines ersten Flugzeugsitzbereichs (14a, 44a; 14b, 44b; 14c, 44c) und eine Konsole (16a, 46a) mit einer starren Beinablage (94a) eines zweiten Flugzeugsitzbereichs (18a, 48a; 18b, 48b; 18c, 48c) ausbildet, mit einem zweiten Flugzeugsitzmodul (20a, 50a; 20b, 50b; 20c, 50c), das einen Flugzeugsitz (22a, 52a; 22b, 52b; 22c, 52c) des zweiten Flugzeugsitzbereichs (18a, 48a; 18b, 48b; 18c, 48c) und eine Konsole (26a, 56a) mit einer starren Beinablage (132a) eines dritten Flugzeugsitzbereichs (28a, 58a; 28b, 58b; 28c, 58c) ausbildet, mit zumindest einem dritten Flugzeugsitzmodul (30a, 60a; 30b, 60b; 30c, 60c), das einen Flugzeugsitz (32a, 62a; 32b, 62b; 32c, 62c) des dritten Flugzeugsitzbereichs (28a, 58a; 28b, 58b; 28c, 58c) und eine Konsole (36a, 66a) mit einer starren Beinablage (106a) eines vierten Flugzeugsitzbereichs (38a, 68a; 38b, 68b; 38c, 68c) ausbildet, und mit einem vierten Flugzeugsitzmodul (84a, 86a; 84b, 86b; 84c, 86c), wobei ein Abstand (70a; 70c) zwischen dem ersten Flugzeugsitzmodul (10a, 40a; 10b, 40b; 10c, 40c) und dem zweiten Flugzeugsitzmodul (20a, 50a; 20b, 50b; 20c, 50c) in Flugrichtung (72a; 72b; 72c) kleiner ist als ein Abstand (74a) zwischen dem zweiten Flugzeugsitzmodul (20a, 50a; 20b, 50b; 20c, 50c) und dem dritten Flugzeugsitzmodul (30a, 60a; 30b, 60b; 30c, 60c) in Flugrichtung (72a; 72b; 72c), wobei das vierte Flugzeugsitzmodul (84a, 86a; 84b, 86b; 84c, 86c), das hinter dem dritten Flugzeugsitzmodul (30a, 60a; 30b, 60b; 30c, 60c) angeordnet ist, einen Abstand (138a) zu dem dritten Flugzeugsitzmodul (30a, 60a; 30b, 60b; 30c, 60c) aufweist, der größer ist als der Abstand (74a) des dritten Flugzeugsitzmoduls (30a, 60a; 30b, 60b; 30c, 60c) zu dem zweiten Flugzeugsitzmodul (20a, 50a; 20b, 50b; 20c, 50c).

2. Flugzeugsitzsystem nach Anspruch 1, **dadurch gekennzeichnet, dass** der Abstand (70a; 70c) zwischen dem ersten Flugzeugsitzmodul (10a, 40a; 10b, 40b; 10c, 40c) und dem zweiten Flugzeugsitzmodul (20a, 50a; 20b, 50b; 20c, 50c) zumindest um die Hälfte kleiner ist als ein Abstand (74a; 74c) zwischen dem zweiten Flugzeugsitzmodul (20a, 50a; 20b, 50b; 20c, 50c) und dem dritten Flugzeugsitzmodul (30a, 60a; 30b, 60b; 30c, 60c).

3. Flugzeugsitzsystem nach Anspruch 1 oder 2, **dadurch gekennzeichnet, dass** das erste und zweite Flugzeugsitzmodul (10a, 20a, 40a, 50a; 10b, 20b, 40b, 50b; 10c, 20c, 40c, 50c) eine Erstreckung in Flugrichtung (72a; 72c) aufweist, die größer ist als eine Erstreckung des dritten Flugzeugsitzmoduls (30a, 60a; 30b, 60b; 30c, 60c) in Flugrichtung (72a; 72c).

4. Flugzeugsitzsystem nach einem der vorhergehenden Ansprüche, **dadurch gekennzeichnet, dass** das Flugzeugsitzmodul (10a, 20a, 40a, 50a) wenigstens ein Konsolenelement (76a, 78a, 80a, 82a) umfasst, das dazu vorgesehen ist, eine Erstreckung des Flugzeugsitzmoduls (10a, 20a, 40a, 50a) in Flugrichtung (72a) zu vergrößern.

5. Flugzeugsitzsystem nach einem der vorhergehenden Ansprüche, **dadurch gekennzeichnet, dass** das zweite Flugzeugsitzmodul (20c, 50c) direkt an das erste Flugzeugsitzmodul (10c, 40c) anschließt.

6. Flugzeugsitzsystem nach einem der vorhergehenden Ansprüche, **dadurch gekennzeichnet, dass** zwei Flugzeugsitzmodule (10a, 20a, 40a, 50a; 10b, 20b, 40b, 50b; 10c, 20c, 40c, 50c), die jeweils eine größere Erstreckung in Flugrichtung (72a; 72c) aufweisen, auf zwei Flugzeugsitzmodule (30a, 60a, 84a, 86a; 30b, 60b, 84b, 86b; 30c, 60c, 84c, 86c) mit einer kleineren Erstreckung in Flugrichtung (72a; 72c) folgen.

7. Flugzeugsitzsystem nach einem der vorhergehenden Ansprüche, **dadurch gekennzeichnet, dass** auf einer Kabinenlänge von 1143 cm (450 Zoll) wenigstens 38 Flugzeugsitzbereiche (14a, 18a, 28a, 38a, 44a, 48a, 58a, 68a; 14b, 18b, 28b, 38b, 44b, 48b, 58b, 68b; 14c, 18c, 28c, 38c, 44c, 48c, 58c, 68c) bereitgestellt werden.

8. Flugzeugsitzsystem nach einem der vorhergehenden Ansprüche, **dadurch gekennzeichnet, dass** der Abstand (70a, 74a, 138a; 70c) jeweils der kleinste Abstand zwischen zwei Flugzeugsitzmodulen (10a, 20a, 30a, 40a, 50a, 60a, 84a, 86a; 10b, 20b, 30b, 40b, 50b, 60b, 84b, 86b; 10c, 20c, 30c, 40c, 50c, 60c, 84c, 86c) ist, der parallel zu der Flugrichtung (72a; 72b; 72c) gemessen wird.

9. Flugzeugsitzmodul nach einem der vorhergehenden Ansprüche.

## Claims

1. Aircraft seat system
with at least one first aircraft seat module (10a, 40a; 10b, 40b; 10c, 40c) implementing an aircraft seat (12a, 42a; 12b, 42b; 12c, 42c) of a first aircraft seat region (14a, 44a; 14b, 44b; 14c, 44c) as well as a console (16a, 46a) with a rigid leg rest (94a) of a second aircraft seat region (18a, 48a; 18b, 48b; 18c, 48c),
with a second aircraft seat module (20a, 50a; 20b, 50b; 20c, 50c) implementing an aircraft seat (22a, 52a; 22b, 52b; 22c, 52c) of the second aircraft seat region (18a, 48a; 18b, 48b; 18c, 48c) as well as a console (26a, 56a) with a rigid leg rest (132a) of a third aircraft seat region (28a, 58a; 28b, 58b; 28c, 58c),
with at least one third aircraft seat module (30a, 60a; 30b, 60b; 30c, 60c) implementing an aircraft seat (32a, 62a; 32b, 62b; 32c, 62c) of the third aircraft seat region (28a, 58a; 28b, 58b; 28c, 58c) as well as a console (36a, 66a) with a rigid leg rest (106a) of a fourth aircraft seat region (38a, 68a; 38b, 68b; 38c, 68c),
and with a fourth aircraft seat module (84a, 86a; 84b, 86b; 84c, 86c),
wherein a distance (70a; 70c) in a flight direction (72a; 72b; 72c) between the first aircraft seat module (10a, 40a; 10b, 40b; 10c, 40c) and the second aircraft seat module (20a, 50a; 20b, 50b; 20c, 50c) is smaller than a distance (74a) in a flight direction (72a; 72b; 72c) between the second aircraft seat module (20a, 50a; 20b, 50b; 20c, 50c) and the third aircraft seat module (30a, 60a; 30b, 60b; 30c, 60c),
wherein the fourth aircraft seat module (84a, 86a; 84b, 86b; 84c, 86c), which is arranged behind the third aircraft seat module (30a, 60a; 30b, 60b; 30c, 60c), has a distance (138a) from the third aircraft seat module (30a, 60a; 30b, 60b; 30c, 60c) that is greater than the distance (74a) of the third aircraft seat module (30a, 60a; 30b, 60b; 30c, 60c) from the second aircraft seat module (20a, 50a; 20b, 50b; 20c, 50c).

2. Aircraft seat system according to claim 1,
**characterised in that** the distance (70a; 70c) between the first aircraft seat module (10a, 40a; 10b, 40b; 10c, 40c) and the second aircraft seat module (20a, 50a; 20b, 50b; 20c, 50c) is smaller by at least 50 % than a distance (74a; 74c) between the second aircraft seat module (20a, 50a; 20b, 50b; 20c, 50c) and the third aircraft seat module (30a, 60a; 30b, 60b; 30c, 60c).

3. Aircraft seat system according to claim 1 or 2,
**characterised in that** the first and second aircraft seat modules (10a, 20a, 40a, 50a; 10b, 20b, 40b, 50b; 10c, 20c, 40c, 50c) has an extension in the flight direction (72a; 72c) that is greater than an extension of the third aircraft seat module (30a, 60a; 30b, 60b; 30c, 60c) in the flight direction (72a; 72c).

4. Aircraft seat system according to one of the preceding claims,
**characterised in that** the aircraft seat module (10a, 20a, 40a, 50a) comprises at least one console element (76a, 78a, 80a, 82a), which is configured to enlarge an extension of the aircraft seat module (10a, 20a, 40a, 50a) in the flight direction (72a).

5. Aircraft seat system according to one of the preceding claims,
**characterised in that** the second aircraft seat module (20c, 50c) directly follows the first aircraft seat module (10c, 40c).

6. Aircraft seat system according to one of the preceding claims,
**characterised in that** two aircraft seat modules (10a, 20a, 40a, 50a; 10b, 20b, 40b, 50b; 10c, 20c, 40c, 50c) each having a greater extension in the flight direction (72a; 72c) follow upon two aircraft seat modules (30a, 60a, 84a, 86a; 30b, 60b, 84b, 86b; 30c, 60c, 84c, 86c) having a smaller extension in the flight direction (72a; 72c).

7. Aircraft seat system according to one of the preceding claims,
**characterised in that** at least 38 aircraft seat regions (14a, 18a, 28a, 38a, 44a, 48a, 58a, 68a; 14b, 18b, 28b, 38b, 44b, 48b, 58b, 68b; 14c, 18c, 28c, 38c, 44c, 48c, 58c, 68c) are provided on a cabin length of 1143 cm (450 inches).

8. Aircraft seat system according to one of the preceding claims,
**characterised in that** the distance (70a, 74a, 138a; 70c) is in each case the smallest distance between two aircraft seat modules (10a, 20a, 30a, 40a, 50a, 60a, 84a, 86a; 10b, 20b, 30b, 40b, 50b, 60b, 84b, 86b; 10c, 20c, 30c, 40c, 50c, 60c, 84c, 86c) measured in parallel to the flight direction (72a; 72b; 72c).

9. Aircraft seat module according to one of the preceding claims.

## Revendications

1. Système de siège d'avion
avec au moins un premier module de siège d'avion (10a, 40a ; 10b, 40b ; 10c, 40c) formant un siège d'avion (12a, 42a ; 12b, 42b ; 12c, 42c) d'une première zone de siège d'avion (14a, 44a ; 14b, 44b ; 14c, 44c) et formant une console (16a, 46a) avec un appuie-jambe rigide (94a) d'une deuxième zone de siège d'avion (18a, 48 ; 18b, 48b ; 18c, 48c),
avec un deuxième module de siège d'avion (20a, 50a ; 20b, 50b ; 20c, 50c) formant un siège d'avion (22a, 52a ; 22b, 52b ; 22c, 52c) de la deuxième zone de siège d'avion (18a, 48a ; 18b, 48b ; 18c, 48c) et formant une console (26a, 56a) avec un appuie-jambe rigide (132a) d'une troisième zone de siège d'avion (28a, 58a ; 28b, 58b ; 28c, 58c),
avec au moins un troisième module de siège d'avion (30a, 60a ; 30b, 60b ; 30c, 60c) formant un siège d'avion (32a, 62a ; 32b, 62b ; 32c, 62c) de la troisième zone de siège d'avion (28a, 58a ; 28b, 58b ; 28c, 58c) et formant une console (36a, 66a) avec un appuie-jambe rigide (106a) d'une quatrième zone de siège d'avion (38a, 68a ; 38b, 68b ; 38c, 68c),
et avec un quatrième module de siège d'avion (84a, 86a ; 84b, 86b ; 84c, 86c),
un espacement (70a ; 70c) entre le premier module de siège d'avion (10a, 40a ; 10b, 40b ; 10c, 40c) et le deuxième module de siège d'avion (20a, 50a ; 20b, 50b ; 20c, 50c) en direction de vol (72a ; 72b ; 72c) étant inférieur à un espacement (74a) en direction de vol (72a ; 72b ; 72c) entre le deuxième module de siège d'avion (20a, 50a ; 20b, 50b ; 20c, 50c) et le troisième module de siège d'avion (30a, 60a ; 30b, 60b ; 30c, 60c),
le quatrième module de siège d'avion (84a, 86a ; 84b, 86b ; 84c, 86c), agencé derrière le troisième module de siège d'avion (30a, 60a ; 30b, 60b ; 30c, 60c), ayant un espacement (138a) au troisième module de siège d'avion (30a, 60a ; 30b, 60b ; 30c, 60c) qui est supérieur à l'espacement (74a) entre le troisième module de siège d'avion (30a, 60a ; 30b, 60b ; 30c, 60c) et le deuxième module de siège d'avion (20a, 50a ; 20b, 50b ; 20c, 50c).

2. Système de siège d'avion selon la revendication 1,
**caractérisé en ce que** l'espacement (70a ; 70c) entre le premier module de siège d'avion (10a, 40a ; 10b, 40b ; 10c, 40c) et le deuxième module de siège d'avion (20a, 50a ; 20b, 50b ; 20c, 50c) est inférieur par au moins 50 % à un espacement (74a ; 74c) entre le deuxième module de siège d'avion (20a, 50a ; 20b, 50b ; 20c, 50c) et le troisième module de siège d'avion (30a, 60a ; 30b, 60b ; 30c, 60c).

3. Système de siège d'avion selon la revendication 1 ou 2,
**caractérisé en ce que** le premier et le deuxième modules de siège d'avion (10a, 20a, 40a, 50a ; 10b, 20b, 40b, 50b ; 10c, 20c, 40c, 50c) présentent une extension en direction de vol (72a ; 72c) qui est supérieure à une extension du troisième module de siège d'avion (30a, 60a ; 30b, 60b ; 30c, 60c) en direction de vol (72a ; 72c).

4. Système de siège d'avion selon l'une quelconque des revendications précédentes,
**caractérisé en ce que** le module de siège d'avion (10a, 20a, 40a, 50a) comporte au moins un élément de console (76a, 78a, 80a, 82a) qui est prévu pour élargir une extension du module de siège d'avion (10a, 20a, 40a, 50a) en direction de vol (72a).

5. Système de siège d'avion selon l'une quelconque des revendications précédentes,
**caractérisé en ce que** le deuxième module de siège d'avion (20c, 50c) joigne le premier module de siège d'avion (10c, 40c) directement.

6. Système de siège d'avion selon l'une quelconque des revendications précédentes,
**caractérisé en ce que** deux modules de siège d'avion (10a, 20a, 40a, 50a ; 10b, 20b, 40b, 50b ; 10c, 20c, 40c, 50c), respectivement ayant une extension supérieure en direction de vol (72a ; 72c), suivent deux modules de siège d'avion (30a, 60a, 84a, 86a ; 30b, 60b, 84b, 86b ; 30c, 60c, 84c, 86c) ayant une extension inférieure en direction de vol (72a ; 72c).

7. Système de siège d'avion selon l'une quelconque des revendications précédentes,
**caractérisé en ce qu'**au moins 38 régions de siège d'avion (14a, 18a, 28a, 38a, 44a, 48a, 58a, 68a ; 14b, 18b, 28b, 38b, 44b, 48b, 58b, 68b ; 14c, 18c, 28c, 38c, 44c, 48c, 58c, 68c) sont fournies sur une longueur de cabine de 1143 cm (450 pouces).

8. Système de siège d'avion selon l'une quelconque des revendications précédentes,
**caractérisé en ce que** l'espacement (70a, 74a, 138a ; 70c) est respectivement l'espacement le plus inférieur entre deux modules de siège d'avion (10a, 20a, 30a, 40a, 50a, 60a, 84a, 86a ; 10b, 20b, 30b, 40b, 50b, 60b, 84b, 86b ; 10c, 20c, 30c, 40c, 50c, 60c, 84c, 86c) mesuré en parallèle à la direction de vol (72a ; 72b ; 72c).

9. Module de siège d'avion selon l'une quelconque des revendications précédentes.
